# EUROPEAN PATENT SPECIFICATION

(11) **EP 4 379 901 B1**
(45) Date of publication and mention of the grant of the patent: **19.11.2025**
(21) Application number: 23197936.0
(22) Date of filing: 18.09.2023
(51) Int. Cl.: H01M 10/42, H02J 7/00, H01M 10/48, H02J 9/00, H01M 10/44

(54) **POWER SUPPLY FOR BATTERY PACK**
STROMVERSORGUNG FÜR BATTERIEPACK
ALIMENTATION ÉLECTRIQUE POUR BLOC-BATTERIE

(30) Priority: 02.12.2022 KR 20220166854
(43) Date of publication of application: 05.06.2024
(73) Proprietor: Samsung SDI Co., Ltd., Yongin-si, Gyeonggi-do 17084 (KR)
(72) Inventor: KIM, Taejin, 17084 Yongin-si (KR)
(74) Representative: Marks & Clerk LLP

(56) References cited:
- US-A1- 2016 164 328
- US-A1- 2020 290 479

## Description

### BACKGROUND OF THE DISCLOSURE

### (a) Field of the Disclosure

The present disclosure relates to a power supply of a battery pack.

### (b) Description of the Related Art

An energy storage system (ESS) stores a large amount of electrical energy and supplies the stored electrical energy when it is needed to improve energy use efficiency. The energy storage system (ESS) includes a high-voltage battery pack for storing electrical energy, and a battery management system (BMS) for monitoring states of the battery pack and control charging and discharging of the battery pack.

Typically, the energy storage system uses a switched mode power supply (SMPS) to supply a control voltage (e.g., an operation voltage of the BMS) to the battery pack. The switched mode power supply (SMPS) converts an alternating current (AC) voltage input by an AC source into a direct current (DC) voltage and supplies the same as a control voltage of the battery pack. This is a relatively inexpensive way to configure the switched mode power supply (SMPS), but requires a costly installation of an AC system power source.

Therefore, recently, attempts have been made to use not the system power source but an internal power source battery voltage and a DC/DC converter to supply a control voltage to the battery pack in the energy storage system (ESS). However, when using the battery voltage and the DC/DC converter, a method for driving the DC/DC converter is needed while an internal power voltage of the battery pack is blocked and a control voltage is not normally supplied to the battery pack.

US2020/290479A1 and US2016/164328A1 provide disclosures relating to battery systems, and in particular disclosures enabling turning on, respectively, a BMU and a control circuit, wherein an operator, respectively, needs to turn on a switch or close a manual switch to trigger said turn-on operation. Additionally, the circuit of both documents involve the use of a relay and at least one DC-DC converter, with the first one also disclosing a second battery of small capacity.

### SUMMARY OF THE DISCLOSURE

The present disclosure attempts to provide a power supply of a battery pack for supplying an operating power voltage to a controller of the battery pack by driving a DC/DC converter while no initial power voltage is applied.

An embodiment of the present disclosure provides a power supply including: a first battery, a second battery; a DC/DC converter for converting a first voltage output by the first battery into a second voltage; a controller for using the second voltage as an operation voltage; a relay connected between the first battery and an input terminal of the DC/DC converter and controlling an electrical connection between the first battery and the input terminal of the DC/DC converter; a first switch connected between an output terminal of the DC/DC converter and a coil of the relay and controlling an electrical connection between the output terminal of the DC/DC converter and the coil; and a second switch connected between the second battery and the coil and controlling an electrical connection between the second battery and the coil. coil. The power supply further comprises a diode connected between the first switch and the second battery and configured to transmit an output voltage of the DC/DC converter as a charging voltage of the second battery if the first switch is closed.

Opening/closing of the first switch is controlled by the controller, and the second switch may be a manual switch opened and closed by a physical manipulation.

The first battery may be a high voltage battery module configuring the battery pack, and the controller may be a battery management system for controlling charging/discharging of the battery pack.

If an output voltage of the second battery is supplied to the coil by the second switch, the relay may be closed to transmit the first voltage to the DC/DC converter.

If the second voltage is supplied by the DC/DC converter, the controller may control the first switch to be closed, and if the first switch is closed, an output voltage of the DC/DC converter may be supplied to the coil.

The power supply may further include two further diodes, a first one thereof being connected between the first switch and the coil and transmitting an output voltage of the DC/DC converter to the coil if the first switch is closed, and a second one thereof being connected between the second switch and the coil and transmitting an output voltage of the second battery to the coil if the second switch is closed.

According to the present disclosure, the power supply of the battery pack may be manufactured with a low cost by using the internal voltage of the battery pack and the DC/DC converter to supply the control voltage to the battery pack.

Further, the operating power voltage may be supplied to the controller of the battery pack by driving the DC/DC converter while no initial power voltage is input.

At least some of the above features that accord with the invention and other features according to the invention are set out in the claims.

### BRIEF DESCRIPTION OF THE DRAWINGS

FIG. 1 shows a power supply of a high-voltage battery pack according to an embodiment.
FIG. 2 shows an operation for supplying a power voltage when a power supply is driven in an earlier stage according to an embodiment.
FIG. 3 shows an operation for supplying a power voltage after a power supply is driven in an earlier stage according to an embodiment.
FIG. 4 shows an operation for charging a second battery in a power supply according to an embodiment.

### DETAILED DESCRIPTION OF THE EMBODIMENTS

Embodiments of the present invention will now be described in detail with accompanying drawings. Effects and characteristics of embodiments, and a realization method thereof, will now be described in detail with accompanying drawings. In the drawings, same reference numerals indicate same constituent elements, and no repeated descriptions thereof will be provided. As those skilled in the art would realize, the described embodiments may be modified in various different ways, all without departing from the scope of the claims. The embodiments are provided as examples to convey aspects and characteristics of the present invention to a person skilled in the art.

Hence, for the purpose of understanding aspects and characteristics of the present invention, processes, factors, and skills that are within the common general knowledge of a person of ordinary skill in the art may not be described. Relative sizes of elements, layers, and regions may be exaggerated for clarity.

In the present specification, the term "and/or" includes all or random combinations of a plurality of items that are related and arranged. When the embodiments of the present invention are described, the use of "may" signifies "at least one embodiment of the present invention". A singular term may include a plural form unless stated in another way.

Terms including ordinal numbers such as first, second, and the like will be used only to describe various components, and are not to be interpreted as limiting these components. The terms are only used to differentiate one component from other components. For example, a first constituent element could be termed a second constituent element, and similarly, a second constituent element could be termed a first constituent element, without departing from the scope of the present invention.

In the present document, when one component or layer is described as "on", "connected", or "coupled" for other components or layers, "on", "connected" and "coupled" include all formed directly or by interposing one or more other components or layers. In addition, when it is disclosed that one component or a layer is "between" two components or layers, it should be appreciated that the corresponding component or layer is a single component or layer or there are one or more interposed other elements or layers.

Electric connection of two constituent elements includes not only a case where the two constituent elements are directly connected, but also a case where the two constituent elements are connected through another constituent element interposed therebetween. Other constituent elements may include a switch, a resistor, a capacitor, and the like. In describing the embodiments, the expression "connection" means electrical connection unless there is an expression "direct connection".

A power supply of a battery pack according to embodiments will now be described with reference to accompanying drawings.

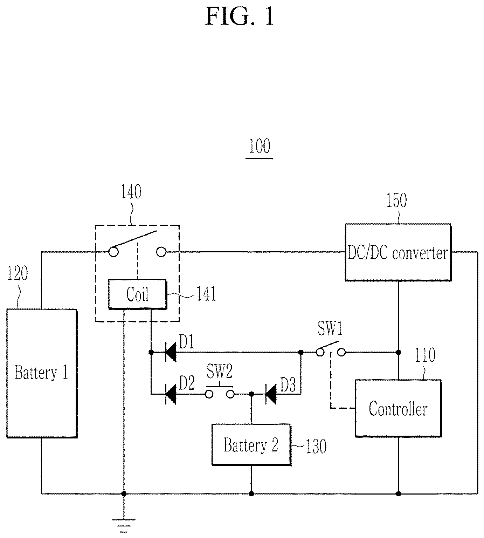

FIG. 1 shows a power supply of a high-voltage battery pack according to an embodiment.

Referring to FIG. 1, the power supply 100 of the high voltage battery pack according to an embodiment may include a controller 110, a first battery 120, a relay 140, and a DC/DC converter 150.

**The** controller 110 may be a battery management system (BMS) for monitoring the high voltage battery pack and controlling charging/discharging of the high voltage battery pack. The controller 110 may control a supplying of power voltage to a coil 141 of the relay 140 and may control opening/closing of the relay 140.

The first battery 120 may be a high-voltage battery module configuring the high voltage battery pack. For example, the first battery 120 may be a battery module in which a plurality of cells are connected in series or in parallel and which may provide an output voltage of about 1000V.

The relay 140 may be connected between the first battery 120 and an input terminal of the DC/DC converter 150, and may selectively transmit an output voltage of the first battery 120 to the DC/DC converter 150. The relay 140 may switch contact state of nodes by a current flowing to the coil 141, may transmit an output voltage of the first battery 120 to the DC/DC converter 150 in a node contacting state, and may block the output voltage of the first battery 120 from being transmitted to the DC/DC converter 150 in a node opening state.

The DC/DC converter 150 may, when receiving the output voltage of the first battery 120 through the relay 140, convert the output voltage into another level of voltage and may output the same. For example, the DC/DC converter 150 may, when receiving the voltage of 1000V from the first battery module 110, may convert it into the voltage of 24V and may output the same. The voltage supplied through the output terminal of the DC/DC converter 150 may be supplied as an operation voltage of the controller 110.

According to what is described in the above, regarding the power supply 100, when the relay 140 is closed (i.e., in a node contacting state), the voltage of the first battery 120 is supplied to the DC/DC converter 150 so the DC/DC converter 150 may supply an operation voltage of the controller 110. When there is no need to supply the operation voltage to the controller 110, power consumption may be reduced by opening the relay 140.

In this case, however, when the relay 140 is opened, it is also blocked to supply a power voltage to the DC/DC converter 150 and the controller 110, so a method for controlling the relay 140 to be closed (i.e., a node contacting state) while the relay 140 is opened, and starting to supply the power voltage to the DC/DC converter 150 and the controller 110 is needed. The power supply 100 may, to solve this problem, operate the relay 140 by using the second battery 130 at its initial driving to supply the power voltage to the DC/DC converter 150 and the controller 110.

To achieve this, the power supply 100 may include a second battery 130, two switches SW1 and SW2, and two diodes D1 and D2.

The second battery 130 may be a charged/discharged battery module for supplying power in an emergency such as a supplying of power for a firefighting in an energy storage system (ESS) including a high voltage battery pack. For example, the second battery 130 may be a battery module for providing the output voltage of about 24V. The person skilled in the art will appreciate that the 24V value is just an example, as is the 1000V example for the first battery. The invention is not limited to any particular voltage values for either the first or the second battery. In embodiments, the first battery a higher voltage than the second battery.

In embodiments, the first battery may comprise a high voltage battery module, wherein the high voltage battery module, may be suitable for powering electric vehicles, whereas the second battery may be suitable for powering electronic circuits.

The switch SW1 and the diode D1 may be electrically connected between an output terminal of the DC/DC converter 150 and the coil 141 of the relay 140, and may selectively transmit the output voltage of the DC/DC converter 150 to the coil 141 of the relay 140. The switch SW2 and the diode D2 may be electrically connected between the second battery 130 and the coil 141 of the relay 140, and may selectively transmit the output voltage of the second battery 130 to the coil 141 of the relay 140.

The switch SW1 may be electrically connected between an output terminal of the DC/DC converter 150 and the diode D1, and its opening/closing may be controlled by the controller 110. When the switch SW1 is closed, it may transmit the output voltage of the DC/DC converter 150 to the diode D1. When the switch SW1 is opened, it may block the output voltage of the DC/DC converter 150 from being transmitted to the diode D1. The switch SW1 may be a switch of which opening/closing is controlled by electrical signals generated by a relay, a contactor, or a semiconductor switch.

The switch SW2 may be electrically connected between the second battery 130 and the diode D2, and its opening/closing may be manually controlled by a manager. When the switch SW2 is closed, it may transmit the output voltage of the second battery 130 to the diode D2. When the switch SW2 is opened, it may prevent the output voltage of the second battery 130 from being transmitted to the diode D2. The switch SW2 may be a switch of which opening/closing is manually controlled by a physical manipulation of such as a push switch. In other words, the second switch, SW2, is a manual switch, controllable by a human operator.

An anode of the diode D1 may be electrically connected to the switch SW1, and a cathode thereof may be electrically connected to the coil 141 of the relay 140. An anode of the diode D2 may be electrically connected to the switch SW2, and a cathode thereof may be electrically connected to the coil 141 of the relay 140.

The diodes D1 and D2 may be operable as an OR circuit, and may transmit the output voltage of the DC/DC converter 150 or the output voltage of the second battery 130 as the driving voltage of the coil 141 of the relay 140.

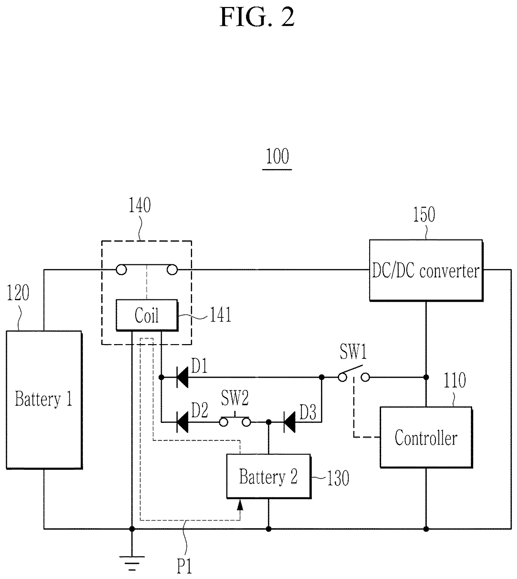

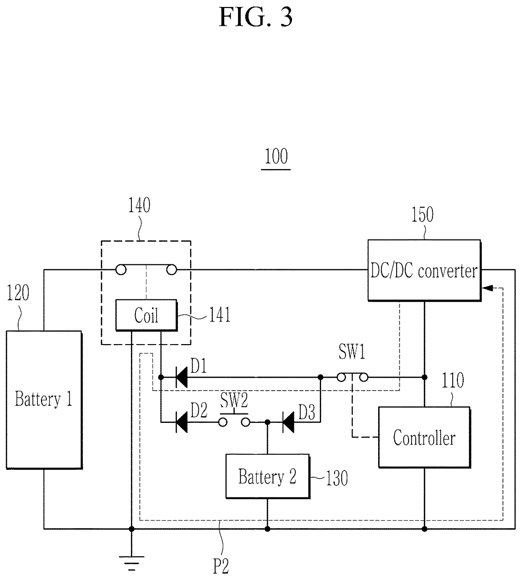

FIG. 2 shows an operation for supplying a power voltage when a power supply of FIG. 1 is driven in an earlier stage. FIG. 3 shows an operation for supplying a power voltage after a power supply of FIG. 1 is driven in an earlier stage.

Referring to FIG. 2, when the power supply 100 is initially driven, a current path P1 may be connected between the second battery 130 and the coil 141 of the relay 140 by the manually manipulated switch SW2. Accordingly, the relay 140 is switched to be closed by the output voltage of the second battery 130, and the output voltage of the first battery 120 may be transmitted to the DC/DC converter 150 through the relay 140. The output voltage of the DC/DC converter 150 may be supplied to the controller 110 and the controller 110 may start to be operated.

Referring to FIG. 3, the controller 110 may control the switch SW1 to be closed so that the relay 140 may be continuously driven. Hence, a current path P2 is connected between the DC/DC converter 150 and the coil 141 of the relay 140, and the relay 140 may be controlled to be closed by the output voltage of the DC/DC converter 150. Therefore, the relay 140 may be continuously closed when the switch SW2 is opened.

While the high voltage battery pack is operated, the supplying of a control power voltage by the high voltage battery pack may be blocked because of an over-discharge of the first battery 120. In this case, the controller 110 may open the relay 140 by opening the switch SW1. When it is needed to supply the control power voltage to the high voltage battery pack, the DC/DC converter 150 may be driven by controlling the relay 140 to be closed by manipulating the switch SW2.

Referring to FIG. 1, the power supply 100 must further include a charging circuit for charging the second battery 130 by using the output voltage of the DC/DC converter 150. The charging circuit must include a diode D3. An anode of the diode D3 may be electrically connected to a node between the switch SW1 and the diode D1, and a cathode thereof may be electrically connected to the second battery 130.

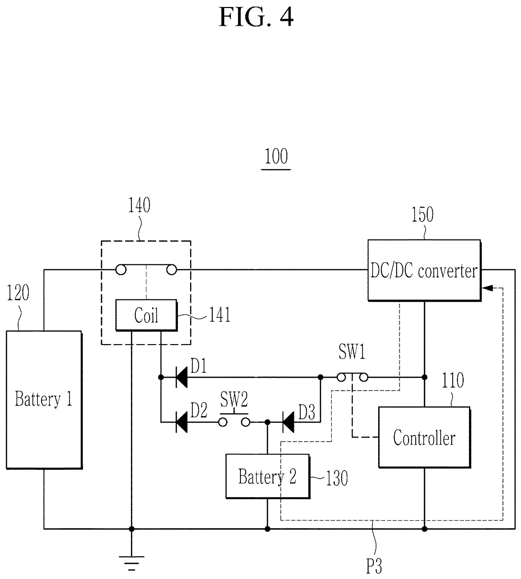

FIG. 4 shows an operation for charging a second battery in a power supply of FIG. 1.

Referring to FIG. 4, when the switch SW1 is closed, a current path P3 may be connected between the DC/DC converter 150 and the second battery 130 by the diode D3. The output voltage of the DC/DC converter 150 may be transmitted to the second battery 130 through the current path P3, and the second battery 130 may then be charged. In this instance, the output voltage of the DC/DC converter 150 may be reduced by a predetermined voltage (e.g., about 0.3V to 0.7V) by the diode D3 and the reduced output voltage of the DC/DC converter 150 may then be transmitted to the second battery 130, thereby delaying a deterioration rate of the second battery 130.

According to the embodiment, when no operation of the controller 110 is needed, the power supply 100 may reduce power consumption by using the relay 140 and blocking the input voltage of the DC/DC converter 150 for supplying an operation voltage to the controller 110.

It is also possible to supply the power voltage to the DC/DC converter 150 and the controller 110 by using the switch SW2 that may be manually manipulated and temporarily providing the output of the second battery 130 to the relay 140. Further, the charging voltage of the second battery 130 may be maintained by configuring the circuit so that the second battery 130 may be charged by the output of the DC/DC converter 150 when the DC/DC converter 150 is operated.

The accompanying drawings and the embodiments of the present invention are only examples of the present invention, and are used to describe the present invention but do not limit the scope of the present invention as defined by the following claims. It will be understood by those of ordinary skill in the art that various modifications and equivalent embodiments may be made, said modifications and equivalences being part of the present invention if they do not contradict the appended claims (i.e. if they comprise at least all features of the independent claim).

Therefore, the technical scope of the present invention is defined by the following claims.

### <Description of symbols>

100: power supply
110: controller
120: first battery
130: second battery
140: relay
141: relay coil
150: DC/DC converter
SW1, SW2: switch
D1, D2, D3: diode

## Claims

1. A battery pack (100)comprising:
a first battery (120);
a second battery (130);
a DC/DC converter (150) for converting a first voltage output by the first battery into a second voltage;
a controller (110) configured to use the second voltage as its operation voltage;
a relay (140) connected between the first battery and an input terminal of the DC/DC converter and configured to control an electrical connection between the first battery and the input terminal of the DC/DC converter;
a first switch (SW1) connected between an output terminal of the DC/DC converter and a coil of the relay and configured to control an electrical connection between the output terminal of the DC/DC converter and the coil; and
a second switch (SW2) connected between the second battery and the coil and configured to control an electrical connection between the second battery and the coil;
a diode (D3) connected between the first switch and the second battery and configured to transmit an output voltage of the DC/DC converter as a charging voltage of the second battery if the first switch is closed,
wherein the controller is configured to control opening and closing of the first switch, and the second switch is a manual switch openable and closable by a physical manipulation.

2. The battery pack of claim 1, wherein
the first battery is a high voltage battery module providing a voltage of at least 1000V, and the controller is a battery management system for controlling charging/discharging of the battery pack.

3. The battery pack of claim 1 or claim 2, wherein
the relay is configured to be closable to transmit the first voltage to the DC/DC converter, in response to an output voltage of the second battery being supplied to the coil by the second switch.

4. The battery pack of any preceding claim, wherein the controller is configured to:
control the first switch to be closed, if the second voltage is supplied by the DC/DC converter; and
supply an output voltage of the DC/DC converter to the coil, if the first switch is closed.

5. The battery pack of any preceding claim, further comprising two additional diodes, wherein:
a first one (D1) of the two additional diodes is connected between the first switch and the coil and configured to transmit an output voltage of the DC/DC converter to the coil if the first switch is closed, and
a second one (D2) of the two additional diodes is connected between the second switch and the coil and configured to transmit an output voltage of the second battery to the coil if the second switch is closed.

## Patentansprüche

1. Batteriepack (100), umfassend:
eine erste Batterie (120);
eine zweite Batterie (130);
einen DC/DC-Wandler (150) zum Umwandeln einer von der ersten Batterie ausgegebenen ersten Spannung in eine zweite Spannung;
eine Steuereinheit (110), die dazu konfiguriert ist, die zweite Spannung als ihre Betriebsspannung zu verwenden;
ein Relais (140), das zwischen der ersten Batterie und einem Eingangsanschluss des DC/DC-Wandlers geschaltet und dazu konfiguriert ist, um eine elektrische Verbindung zwischen der ersten Batterie und dem Eingangsanschluss des DC/DC-Wandlers zu steuern;
einen ersten Schalter (SW1), der zwischen einem Ausgangsanschluss des DC/DC-Wandlers und einer Spule des Relais geschaltet und dazu konfiguriert ist, um eine elektrische Verbindung zwischen dem Ausgangsanschluss des DC/DC-Wandlers und der Spule zu steuern; und
einen zweiten Schalter (SW2), der zwischen der zweiten Batterie und der Spule geschaltet und dazu konfiguriert ist, eine elektrische Verbindung zwischen der zweiten Batterie und der Spule zu steuern;
eine Diode (D3), die zwischen dem ersten Schalter und der zweiten Batterie geschaltet und dazu konfiguriert ist, eine Ausgangsspannung des DC/DC-Wandlers als eine Ladespannung der zweiten Batterie zu übertragen, wenn der erste Schalter geschlossen ist,
wobei die Steuereinheit dazu konfiguriert ist, Öffnen und Schließen des ersten Schalters zu steuern, und der zweite Schalter ein manueller Schalter ist, der durch eine physische Manipulation geöffnet und geschlossen werden kann.

2. Batteriepack nach Anspruch 1, wobei
die erste Batterie ein Hochspannungsbatteriemodul ist, das eine Spannung von mindestens 1000 V bereitstellt, und die Steuereinheit ein Batteriemanagementsystem zur Steuereinheit des Ladens/Entladens des Batteriepacks ist.

3. Batteriepack nach Anspruch 1 oder Anspruch 2, wobei
das Relais so konfiguriert ist, dass es geschlossen werden kann, um die erste Spannung als Reaktion auf eine Ausgangsspannung der zweiten Batterie, die der Spule durch den zweiten Schalter zugeführt wird, an den DC/DC-Wandler zu übertragen.

4. Batteriepack nach einem vorstehenden Anspruch, wobei die Steuereinheit weiter dazu konfiguriert ist:
den ersten Schalter so zu steuern, dass er geschlossen wird, wenn die zweite Spannung vom DC/DC-Wandler zugeführt wird; und
eine Ausgangsspannung des DC/DC-Wandlers an die Spule zuführt, wenn der erste Schalter geschlossen wird.

5. Batteriepack nach einem vorstehenden Anspruch, der weiter zwei zusätzliche Dioden umfasst, wobei:
eine erste (D1) der beiden zusätzlichen Dioden zwischen dem ersten Schalter und der Spule geschaltet und dazu konfiguriert ist, eine Ausgangsspannung des DC/DC-Wandlers zur Spule zu übertragen, wenn der erste Schalter geschlossen wird, und
eine zweite (D2) der beiden zusätzlichen Dioden zwischen dem zweiten Schalter und der Spule angeschlossen und dazu konfiguriert ist, eine Ausgangsspannung der zweiten Batterie an die Spule zu übertragen, wenn der zweite Schalter geschlossen wird.

## Revendications

1. Bloc-batterie (100) comprenant :
une première batterie (120) ;
une seconde batterie (130) ;
un convertisseur CC/CC (150) pour convertir une première tension délivrée par la première batterie en une seconde tension ;
un dispositif de commande (110) configuré pour utiliser la seconde tension comme tension de fonctionnement ;
un relais (140) connecté entre la première batterie et une borne d'entrée du convertisseur CC/CC et configuré pour commander une connexion électrique entre la première batterie et la borne d'entrée du convertisseur CC/CC ;
un premier commutateur (SW1) connecté entre une borne de sortie du convertisseur CC/CC et une bobine du relais et configuré pour commander une connexion électrique entre la borne de sortie du convertisseur CC/CC et la bobine ; et
un second interrupteur (SW2) connecté entre la seconde batterie et la bobine et configuré pour commander une connexion électrique entre la seconde batterie et la bobine ;
une diode (D3) connectée entre le premier interrupteur et la seconde batterie et configurée pour transmettre une tension de sortie du convertisseur CC/CC comme tension de charge de la seconde batterie si le premier interrupteur est fermé,
dans lequel le dispositif de commande est configuré pour commander l'ouverture et la fermeture du premier commutateur, et le second commutateur est un commutateur manuel pouvant être ouvert et fermé par une manipulation physique.

2. Bloc-batterie selon la revendication 1, dans lequel
la première batterie est un module de batterie à haute tension fournissant une tension d'au moins 1000 V, et le dispositif de commande est un système de gestion de batterie pour commander la charge/décharge de la batterie.

3. Bloc-batterie selon la revendication 1 ou la revendication 2, dans lequel
le relais est configuré pour pouvoir être fermé afin de transmettre la première tension au convertisseur CC/CC, en réponse à une tension de sortie de la seconde batterie fournie à la bobine par le second commutateur.

4. Bloc-batterie selon une quelconque revendication précédente, dans lequel le dispositif de commande est configuré pour :
commander la fermeture du premier interrupteur si la seconde tension est fournie par le convertisseur CC/CC ; et
fournir une tension de sortie du convertisseur CC/CC à la bobine si le premier interrupteur est fermé.

5. Bloc-batterie selon une quelconque revendication précédente, comprenant en outre deux diodes supplémentaires, dans lequel :
une première (D1) des deux diodes supplémentaires est connectée entre le premier interrupteur et la bobine et configurée pour transmettre une tension de sortie du convertisseur CC/CC à la bobine si le premier interrupteur est fermé, et
une seconde (D2) des deux diodes supplémentaires est connectée entre le second interrupteur et la bobine et configurée pour transmettre une tension de sortie de la seconde batterie à la bobine si le second interrupteur est fermé.
